# EUROPÄISCHE PATENTSCHRIFT

(11) **EP 1 110 855 B1**
(45) Veröffentlichungstag und Bekanntmachung des Hinweises auf die Patenterteilung: **23.01.2008**
(21) Anmeldenummer: 00127755.7
(22) Anmeldetag: 19.12.2000
(51) Int. Cl.: B62M 11/16

(54) **Mehrgangnabe für ein Fahrrad**
Multi-speed hub gears
Moyeu à vitesses multiples

(30) Priorität: 24.12.1999 DE 19963059; 07.12.2000 DE 10061181
(43) Veröffentlichungstag der Anmeldung: 27.06.2001
(73) Patentinhaber: SRAM Deutschland GmbH, 97404 Schweinfurt (DE)
(72) Erfinder: Steuer, Werner, 97424 Schweinfurt (DE); Kohaupt, Michael, 97424 Schweinfurt (DE)

(56) Entgegenhaltungen:
- EP-A- 0 803 430
- GB-A- 885 942
- US-A- 4 651 853

## Beschreibung

Die Erfindung bezieht sich auf eine Mehrgangnabe für ein Fahrrad zur Steuerung mehrerer Gangstufen gemäß dem Oberbegriff des Anspruchs 1.

Mit der EP 803 430 A1 ist eine Übersetzungsnabe bekannt geworden, welche eine Einrichtung zum Aussteuern von Klinken aufweist, die darin besteht, dass ein um die Achse drehbar angeordneter Schaltring, der drehfest aber axial verschiebbar mit dem Antreiber verbunden ist, ein axial wirkendes Profil aufweist, welches mit einem Schubklotz zusammenwirkt, welcher in einem Schlitz hin und her schiebbar ist, um die einzelnen Gangstufen zu steuern. Der Schlitz in der Nabenachse ist nicht wie üblich symmetrisch zur Achse parallel verlaufend, sondern schraubenförmig angeordnet, so dass der Schubklotz bei seiner Bewegung in Achsrichtung eine zusätzliche Drehbewegung durchlaufen muß. Der Schaltring hat neben seiner Aufgabe, eine Verbindung durch eine Klauenkupplung zu unterbrechen, auch die Aufgabe, eine Klinke auch unter Last auszuheben und nach dem Aushebevorgang diese zu unterwandern und im ausgehobenen Zustand zu halten. Um die Klinke auszuheben, muß der Schaltring axial unter Kraft verschoben werden, wobei die Kraft wesentlich größer ist als die Schaltkraft, die von außerhalb auf den Schubklotz ausgeübt werden kann. Aus diesem Grund ist das Profil im Schaltring mit Schrägen versehen, die mit den äußeren Enden des Schubklotzes in der Weise zusammenwirken, dass der beim Schalten einmal in das Profil eingetauchte Schubklotz wegen der Abstimmung der Schraubensteigung für den Schubklotz in der Achse mit den Schrägen im Profil des Schaltringes an dieser Stelle bleibt und der Schaltring durch die vom Fahrer aufgebrachte Drehkraft vom Schubklotz über die Schrägen im Schaltring abgewiesen und unter die Klinke geschoben wird. Der jeweilige Winkel der Schraubensteigung und der Winkel der Schrägen sind derart aufeinander abgestimmt, dass im Schaltungsfalle der Schubklotz durch Reibschluß an der jeweiligen Position festgeklemmt wird. Diese Klemmung des Schubklotzes an jeder Stelle des Schlitzes in der Achse ermöglicht das Schalten von verschiedenen Gangstufen an unterschiedlichen Kupplungselementen der Nabe. Da es einen Unterschied macht, ob eine Klinkenkupplung oder eine Klauenkupplung ausgesteuert wird, kann die Zuordnung der Schraubensteigung zu den Winkeln der Schrägen nur als Kompromiss angesehen werden.

In der US 4 651 853 A wird eine Umlenksteuereinrichtung für eine Mehrgangnabe offenbart, in der mittels eines mit schrägen Steuerkanten ausgestatteten Schaltringes die Zugbewegung einer Schaltstange in eine entgegen gesetzte Richtung umgelenkt wird. Die Übertragung und Richtungsumkehr der linearen Schaltbewegung von der Schaltstange auf eine drehfeste Schalthülse erfolgt über stirnseitige Steuerkanten am drehbaren Schaltring. Ein Schubklotz wird von der Schaltstange entlang eines Schlitzes in der Nabenachse in eine Richtung verschoben und nimmt dabei eine drehfeste Hülse mit. Eine schräge Steuerkante an der Hülse wirkt auf eine entsprechende Steuerkante des Schaltringes und verdreht den ortsfesten Schaltring. Eine zweite Steuerkante am drehenden Schaltring wirkt gleichzeitig auf die Steuerkante der drehfesten Schalthülse und verschiebt dies in die entgegen gesetzte Richtung. Diese Vorrichtung dient zur Richtungsumkehr und Weiterleitung von Schaltkräften und kann nicht für die Steuerung einer unter hoher Last stehenden Klauenkupplung verwendet werden.

Mit der GB 885 942 ist eine selbst schaltende Mehrgangnabe bekannt geworden, die den Schaltvorgang automatisch und drehmomentabhängig einleitet. Übersteigt das aktuell vom antreibenden Drehelement an ein angetriebenes Drehelement übertragene Drehmoment einen definierten Wert, so verdreht sich das federvorgespannte und mit einer Schrägverzahnung versehene antreibende Drehelement gegenüber dem ebenfalls drehenden und mit einer entsprechenden Schrägverzahnung ausgestattete angetriebene Drehelement. Das gegenseitige Verdrehen der ineinander eingreifenden Schrägverzahnung bewirkt eine axiale Verschiebung des antreibenden Drehelementes aus dem Eingriffsbereich des ersten angetriebene Drehelementes in den Eingriffsbereich einer Schrägverzahnung eines anderen benachbarten angetriebenen Drehelementes. Unterschreitet das übertragene Drehmoment einen definierten Wert, so erfolgt der Koppelvorgang in die andere Richtung. Diese drehmomentabhängige Schaltvorrichtung eignet sich nicht für eine manuelle Schaltbetätigung bzw. Steuerung einer Klauenkupplung.

Die Schalteinrichtung gemäß der vorliegenden Erfindung beschränkt sich lediglich auf die Steuerung einer Klauenkupplung, die unter allen Lastzuständen ausgesteuert werden kann. Es wird daher eine servounterstützte Schalteinrichtung vorgeschlagen, bestehend aus einem durch eine Schaltvorrichtung steuerbaren Schaltelement, welches in einem Schlitz einer Nabenachse untergebracht ist und von der Schaltvorrichtung in axialer Richtung bewegt werden kann. Die am Außenzylinder der Nabenachse überstehenden Enden des Schaltelementes verbergen sich innerhalb einer Aussparung eines Ringes, der gleichzeitig einen Anschlag in axialer Richtung für ein Stellelement aufweist, welches wiederum axial an einem Drehelement anliegt, welches seinerseits durch eine Klauenkupplung mit einem Getriebeteil verbindbar ist. Die Klauenkupplung kann durch axiales Verschieben des Drehelementes ausgerückt werden, wobei das Drehelement eine Kurvenbahn aufweist, welche im Falle einer Schaltung mit dem Stellelement zusammenwirkt, das Vorsprünge aufweist, die mit der Kurvenbahn des Drehelementes zusammenwirken. Wird das Stellelement gegenüber dem Drehelement auf eine unterschiedliche Drehzahl gebracht, so laufen die Vorsprünge auf der Kurvenbahn auf und das Drehelement wird hierdurch axial verschoben, wenn insbesondere das Stellelement vom Schaltelement festgehalten wird und das Drehelement mit dem Getriebeelement weiterhin angetrieben wird. In diesem Fall wird die Klauenkupplung gelöst, wobei diese Lösung auch unter extremen Lastbedingungen durchgeführt werden kann. Es ist also mit einer solchen Anordnung einer Schalteinrichtung durchaus möglich, durch schlagartiges Wechseln der Gangstufen unter Last die Getriebeelemente zu zerstören, wenn nicht eine Lastbegrenzung in Form einer Überlastkupplung eingebaut ist. Beim Fahren eines Fahrrades in Extrembereichen am Berg oder im Gelände kann es erforderlich werden, das Schalten von einer Gangstufe zur nächsten unter allen Umständen durchzuführen. Das höchste Drehmoment wird bekanntlich bei etwa waagerecht stehenden Pedalarmen erreicht, wenn das volle Körpergewicht und zuzüglich Abstützkräfte auf die Getriebeelemente wirken. Eine Überlastkupplung kann also dafür sorgen, dass der Gangwechsel erst dann erfolgt, wenn die Drehmomentspitzen im Antrieb wieder abgeklungen sind. Eine solche Überlastkupplung kann in Form einer Friktionskupplung entweder im Stellelement oder im Drehelement angeordnet sein, die dann durchrutscht, wenn ein vorher eingestelltes Drehmoment überstiegen wird. Andererseits können die Flanken der Arretierungsklauen in axialer Richtung je eine Schräge aufweisen, wodurch auf das Schaltelement eine axial gegen die Schaltrichtung wirkende Kraftkomponente ausgeübt wird, die die Schalteinrichtung zurückschiebt, wenn ein bestimmtes Drehmoment während des Schaltprozesses überschritten ist. Je stärker nämlich das Drehmoment auf die Elemente des Schaltgetriebes wirken, desto höher müssen die Kräfte sein, die die Klauen der Klauenkupplung gegeneinander verschieben können.

Es ergibt sich somit die Aufgabe der Erfindung, eine Schalteinrichtung zu schaffen, mit der es möglich ist, eine Kupplung während der Fahrt auch unter hohen Drehmomenten zu schalten, ohne erhöhte Schaltkräfte durch den Fahrer aufzubringen, wobei Servokräfte wirken, die dem Antrieb der Nabe durch den Benutzer des Fahrrades entnommen werden.

Die Lösung der Aufgabe ist im Kennzeichen des Anspruchs 1 erläutert. Ausgestaltungen sind den Unteransprüchen zu entnehmen.

Anhand von Schnittzeichnungen wird die Schalteinrichtung zur Erzeugung von Servokräften zum Ausrücken einer Klauenkupplung erläutert. Es zeigen:
- Figur 1: einen Teilschnitt einer Mehrgangnabe mit einem Schaltelement in einem Schlitz einer Nabenachse, welches mit Arretierungsklauen eines Stellelementes zusammenwirkt, welches wiederum ein Drehelement axial verschieben kann.
- Figur 2: das Stellelement mit zum Drehelement hin weisenden Vorsprüngen und auf der gegenüberliegenden Seite Arretierungsklauen für den Eingriff des Schaltelementes.
- Figur 3: das Drehelement, welches als Bestandteil der Klauenkupplung über eine Kurvenbahn mit den Vorsprüngen am Stellelement zusammenwirkt.
- Figur 4: eine andere Ausführungsform einer servounterstützten Schalteinrichtung mit Ausschaltfunktion oberhalb des Grenzlastschaltmomentes durch Einsatz einer federbelasteten Reibungskupplung für den Antrieb der Servoeinrichtung.
- Figur 5: eine weitere Ausführungsform einer servounterstützten Schalteinrichtung mit Ausschaltfunktion oberhalb des Grenzlastschaltmomentes durch Einsatz einer Druckfeder im Kraftpfad der servounterstützten Schaltkraft.
- Figur 6: eine weitere Ausführungsform einer servounterstützten Schalteinrichtung mit Ausschaltfunktion oberhalb des Grenzlastschaltmomentes durch Einsatz einer Druckfeder an einer anderen Position im Kraftpfad der servounterstützten Schaltkraft.

Wird mit 1 eine Nabenachse einer Mehrgangnabe bezeichnet, so ist auf dieser ein Ring 2 angeordnet, der axial an einem Ringwulst 3 anliegt, welcher mit der Nabenachse 1 verbunden ist. Der Ring 2 weist auf der dem Ringwulst 3 gegenüberliegenden Seite einen Anschlag 13 auf, an dem sich ein Stellelement 8 mit seiner Stirnfläche, die von Arretierungsklauen 14 gebildet wird, abstützt. Der Ring 2 weist auf der Seite des Anschlages 13 außerdem eine Aussparung 17 auf, in die ein Schaltelement 16 eintauchen kann, so dass es die Arretierungsklauen 14 des Stellelementes 8 nicht mehr berühren kann. Das Schaltelement 16 ist mit einer Schaltvorrichtung 5 verbunden, mit Hilfe derer das Schaltelement 16 in axialer Richtung bewegt werden kann. Vorzugsweise wird die Schaltvorrichtung 5 in einer koaxialen Bohrung der Nabenachse 1 geführt und an einem der Enden der Nabenachse 1 nach außen geführt und mit einem Bedienungshebel am Fahrrad zum Steuern der einzelnen Gangstufen verbunden. Das Schaltelement 16 kann vorzugsweise als Schubklotz ausgebildet sein, der in einem Schlitz 18 der Nabenachse 1 angeordnet ist, wodurch es möglich wird, dass die Enden des Schaltelementes 16 mit den Arretierungsklauen 14 in Verbindung treten können. Das Drehelement 6 bildet mit einem Getriebeteil 10, über welches der Kraftfluss von einem Antreiber an eine Nabenhülse in einem Schaltgetriebe 4 der Mehrgangnabe läuft, eine Klauenkupplung bildet, wobei das Drehelement 6 erste Klauen 11 und das Getriebeteil 10 zweite Klauen 12 aufweisen. Für den Fall, dass die ersten Klauen 11 mit den zweiten Klauen 12 in Wirkverbindung stehen, liegt das Drehelement 6 am Stellelement 8 an, wobei die Stirnflächen der Arretierungsklauen 14 am Anschlag 13 des Ringes 2 anliegen und diesen am Ringwulst 3 abstützen und in seiner axialen Lage halten.

Gemäß Fig. 2 weist das Stellelement 8 Vorsprünge 15 auf, die mit einer Kurvenbahn 7 an der Stirnfläche des Drehelementes 6 zusammenwirken, wobei die Kurvenbahn 7 vorzugsweise mit Schrägflächen 9 ausgebildet ist, an denen die Vorsprünge 15 bei Verdrehen des Drehelementes 6 gegen das Stellelement 8 aufgleiten und eine axiale Auseinanderverschiebung der beiden Teile 6 und 8 bewirken. Die axiale Verschiebung des Drehelements 6 bewirkt somit die Verschiebung der ersten Klauen 11 aus dem Kupplungsverband mit den zweiten Klauen 12 am Getriebeteil 10, wobei der Gangwechsel im Schaltgetriebe 4 sofort nach dem Auseinanderrücken der beiden Klauen 11 und 12 vollzogen ist.

Hinsichtlich der Funktion ist anzumerken, dass der Schaltvorgang theoretisch bereits beim Überschreiten des Schaltelementes 16 einer Linie des Anschlages 13 am Ring 2 in die Zwischenräume zwischen den Arretierungsklauen 14 am Stellelement 8 eingeleitet ist, wobei aber in der Praxis die Verschiebung des Schaltelementes 16 durch eine angefederte Schaltvorrichtung 5 erfolgt, die das Schaltelement 16 dann zwischen die Arretierungsklauen 14 widerstandslos einschalten kann, wenn die Arretierungsklauen 14 voneinander einen ausreichend großen Abstand aufweisen. Die Anfederung der Schaltvorrichtung 5 ist für den unwahrscheinlicheren Fall vorgesehen, das das Schaltelement 16 auf die Stirnflächen der Arretierungsklauen 14 trifft und erst nach Vorbeiwandern dieser Arretierungsklauen 14 in die Zwischenräume eintauchen kann. Nachdem das Schaltelement 16 zwischen die Arretierungsklauen 14 eingetaucht ist, wird das Stellelement 8 schlagartig an der synchronen Drehung mit dem Drehelement 6 gehindert, wobei die vorbeschriebene axiale Auseinanderverschiebung einsetzt. Die neue Gangstufe bleibt solange erhalten, solange die ersten Klauen 11 mit den zweiten Klauen 12 außer Eingriff sind. Dieser Zustand bleibt solange bestehen wie das Schaltelement 16 zwischen den Arretierungsklauen 14 verharrt. In diesem Zustand bleibt die Übertragung zwischen dem Schaltelement 16 und den Arretierungsklauen 14 am Stellelement 8 kraftlos, weshalb es ohne Probleme möglich ist, das Schaltelement 16 aus seinem Verband zu lösen und in seine Ursprungslage, nämlich in der Aussparung 17, des Rings 2 zurückzufahren. In diesem Fall kann der Verband zwischen den ersten Klauen 11 und den zweiten Klauen 12 wieder hergestellt werden, wobei eine solche Verbindung dann erfolgreich durchgeführt werden kann, wenn zwischen den Klauen 11 und 12 ausreichend große Zwischenräume angeordnet sind.

Wie schon erwähnt, kann es für bestimmte Anwendungsfälle von Bedeutung sein, einen Überlastschutz in Form einer Überlastkupplung einzubauen, der im Kraftfluss zwischen den Arretierungsklauen 14 und den ersten Klauen 11 einzubauen wäre. So ist vorstellbar, dass das Drehelement zweigeteilt ist und der erste Teil mit der Kurvenbahn 7 vom zweiten Teil mit den ersten Klauen 11 durch eine federbelastete Friktion unterbrochen ist. Diese federbelastete Friktion kann aus einem Toleranzring bestehen, der relativ hohe Drehmomente übertragen kann und durch seine Dimensionierung ein maximales Drehmoment bei der Betätigung des Schaltgetriebes nicht überschreiten lässt. In gleicher Weise kann die Friktion im Stellelement 8 zwischen den Arretierungsklauen 14 und den Vorsprüngen 15 angeordnet sein. Ebenso kann, wie bereits oben beschrieben, eine Drehmomentüberlastung des Getriebes durch Schrägen an den Arretierungsklauen und/oder am Schaltelement 16 vermieden werden. Eine solche Konstellation führt dazu, dass bei Überschreiten eines maximalen Drehmomentes das Schaltelement aus seinem Verband zwischen den Arretierungsklauen 14 nach dem Einfahren in die Zwischenräume zwischen den Arretierungklauen 14 wieder gegen die Schaltrichtung herausgeschoben wird.

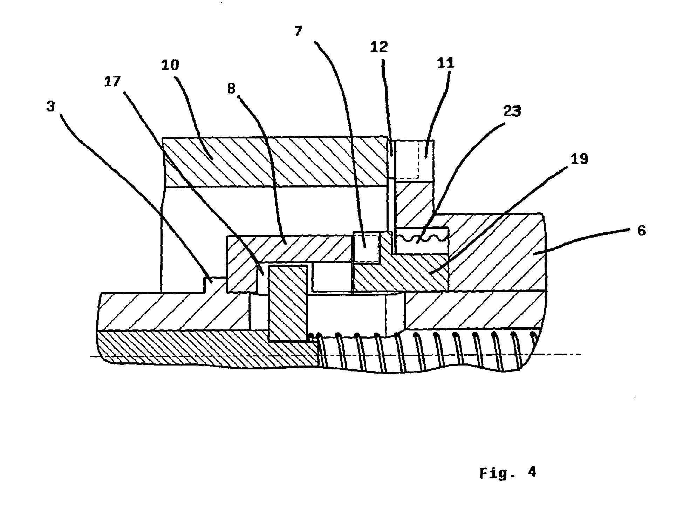

Der Aufbau eines Servomechnismus mit einer Friktionskupplung in dem beschriebenen Mechanismus zur Unterdrückung der Umschaltfunktion bei einem zu großen Drehmoment im Antriebsmomentenpfad zwischen Drehelement 6 und Getriebeteil 10 ist in Fig. 4 erkennbar. Die Reibungskupplung ist nur schematisch dargestellt.

Wie auch in der beschriebenen Ausführungsform ohne Ausschaltfunktion des Servomechanismus kommt der Servomechanismus dadurch zur Wirkung, dass das Getriebeteil 10 relativ zum Stellelement 8 eine Relativdrehzahl aufweist. Mit der zusätzlichen Reibungskupplung 23 wird dieser Wirkmechanismus außer Kraft gesetzt.

Die Kurvenbahn 7 mit der Schrägfläche 9 ist zwischen dem Stellelement 8 und dem ersten Teil des Drehelementes in Gestalt der Hülse 19 angeordnet. Die Hülse 19 dreht sich normalerweise gemeinsam mit dem Drehelement 6. Übersteigt allerdings das Koppelmoment an der Reibungskupplung 23 einen Grenzwert, kommt es zum Durchrutschen dieser Kupplung und die Hülse 19 bleibt relativ zum Stellelement 8 stehen. Damit ist der Servomechanismus unwirksam, auch wenn eine Relativdrehzahl zwischen Drehelement 6 und Getriebeteil 10 vorliegt.

In dieser Reibungskupplung wirken zwischen dem Drehteil 6 und der Hülse 7 radiale Kontaktkräfte durch eine elastische Verformung eines zwischen dem inneren und äußeren Teil angeordneten elastischen Elementes, das hier nicht näher beschrieben wird. In Umfangsrichtung werden entsprechende Reibungskräfte erzeugt.

Die Größe dieser Reibungskräfte bestimmen, ab welchem Grenzlastschaltmoment an der Klauenkupplung 11/12 ein Durchrutschen der Reibungskupplung 24 einsetzt und der Servomechanismus unwirksam wird, wodurch die relative Axialverschiebung der Klauen 11 zu den Klauen 12 ausbleibt.

Eine Reibungskupplung mit derselben Wirkungsweise und gleicher Aufgabenstellung kann in einer weiteren möglichen Ausführungsform zwischen dem Schaltelement 16 und der Arretierklaue 14 angeordnet werden. Sie dient dann im Überlast-Fall dazu, das Stellelement 8 weiter gemeinsam mit dem Drehelement 6 rotieren zu lassen, um so ein Auskoppeln der Klauenkupplung 11/12 zu unterbinden.

Vorstehend wurde beschrieben, wie durch Unterbrechung des Antriebes des Servomechanismus ein Umschalten verhindert werden kann. Ein Überlastschutz ist weiterhin durch Begrenzung der mit dem Servomechanismus erzeugten axialen Schaltkraft realisierbar. Zu diesem Zweck wird in den Verlauf der durch den Servomechanismus erzeugten Axialkraft ein kraftbegrenzendes Element eingefügt. Das kann zweckmäßigerweise ein elastisches Element sein, etwa in Gestalt einer axial komprimierbaren Feder, die sich unter einer bestimmten Vorspannung befindet.

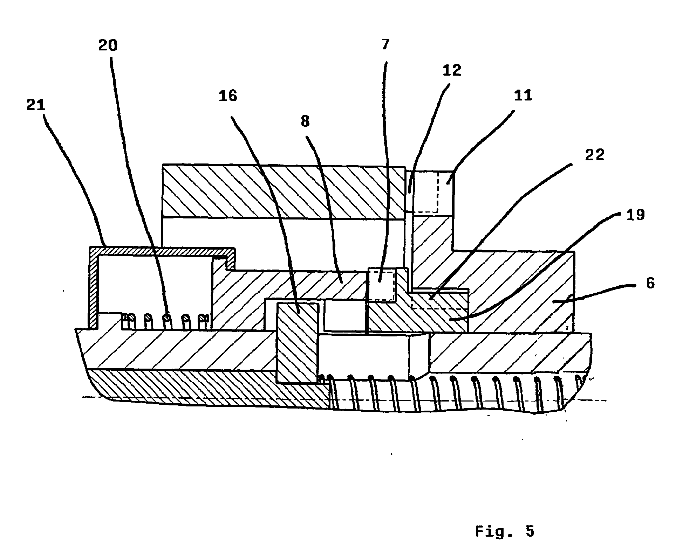

In Fig. 5 ist die Feder 20 gezeigt, die in einer der möglichen Ausführungformen zwischen dem axialen Anschlag in Gestalt der Ringwulst 3 und dem Servomechanismus angeordnet ist. Sie befindet sich unter Vorspannung, wobei sie von einem Joch 21 daran gehindert wird, sich über eine maximale Länge hinaus auszudehnen.

Ist die von außen auf das Federpaket einwirkende Druckkraft betragsmäßig kleiner als die Federvorspannung, verhält sich das Federpaket wie ein fester Körper mit definierter effektiver axialer Länge und überträgt die anliegende Druckkraft auf das andere Ende der Funktionskette. Wächst andernfalls die auf das Federpaket einwirkende axiale Druckkraft über den Betrag der Federvorspannung an, wird das Federpaket komprimiert und die effektive Länge verringert sich. Dann ist der mit dem Federpaket übertragene Anteil der mit dem Servomechanismus erzeugten Kraft nicht mehr ausreichend, um die Klauen 11 und 12 zu trennen, weil dann die an den Klauen 11 und 12 infolge der Wirkung des Drehmomentes erzeugte Reibungskraft größer ist.

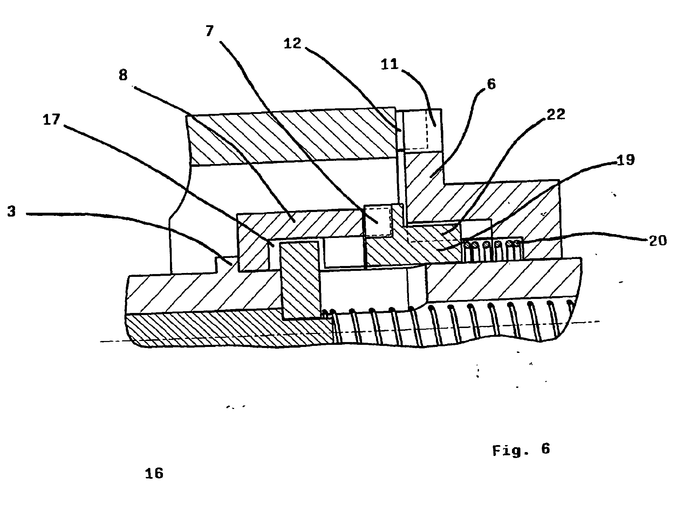

In Fig. 6 ist das Federpaket im Kraftfluß zwischen dem Servomechanismus und dem zu schaltenden Drehelement 6 angeordnet.
Wird nun der Servomechanismus eingeschaltet und das Drehmoment am Drehelement 6 liegt über dem Grenzlastschaltmoment, so wird zwar der Servomechanismus in Gang gesetzt, aber die Klauenkupplung wird nicht außer Eingriff gebracht, weil das Federpaket die mit dem Servomechanismus erzeugte Axialverschiebung aufnimmt. Oberhalb des Grenzlastschaltmomentes dient das Drehelement 6 als axialer Anschlag für die axiale Kompression der Feder 20, weil die Klaue 11 sich dann nicht mehr gegenüber der Klaue 12 bewegen kann.

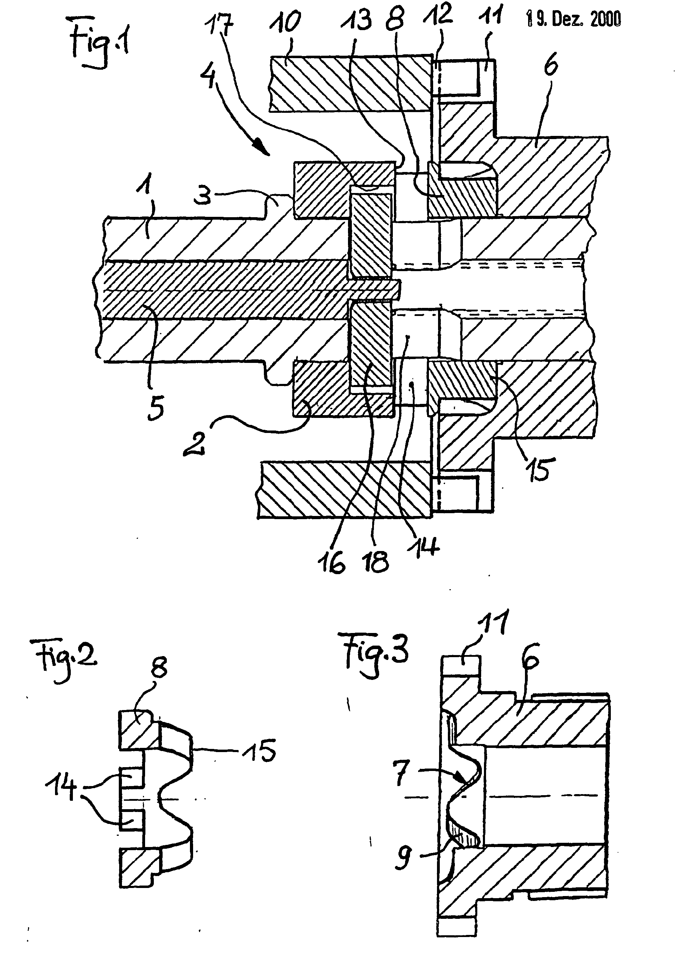

Dabei wird davon ausgegangen, dass für diese Wirkung das Getriebeteil 10 axial unverschieblich sein muß, was auch für das Funktionieren des Mechanismus in der Grundversion entsprechend Fig. 1 ohne Ausschaltfunktion oberhalb des Grenzlastschaltmomentes vorausgesetzt wird.

Weiterhin muß sichergestellt werden, dass bei Variante entsprechend Fig. 5 das Schaltelement 16 so weit in die Arretierungsklaue 14 am Stellelement eintauchen kann und ein entsprechender Freiraum vorhanden ist, damit die axiale Verschiebung des Stellgliedes 8 in Richtung gegen den Anschlag 3 möglich ist, ohne aus der Arretierklaue auszutreten. Andernfalls sind entsprechende Vorkehrungen an der Schaltvorrichtung zu treffen, denn dann muß die Schaltvorrichtung in diese Richtung ausweichen können.

Mit dem Servomechanismus wird eine Klauenkupplung ausgekoppelt, nicht eingekoppelt. Das kann unabhängig von der relativen Lage des Drehelementes 6 zum Getriebeteil 10 geschehen. Somit gibt es keine Eingrenzungen bezüglich des Schaltzeitpunktes, in dem der Auskoppelvorgang durch Verschieben des Schaltelementes eingeleitet wird.

Der Vorteil bei der vorbeschriebenen servounterstützten Ausschaltung einer Klauenkupplung liegt in ihrer kostengünstigen Herstellung, in der Möglichkeit mehrere solcher servounterstützter Schalteinrichtungen anzuordnen, sowie in der Möglichkeit, einen Überlastschutz ohne größere Inanspruchnahme von Bauraum zu installieren.

### Zusammenfassung

Mehrgangnabe für ein Fahrrad, umfassend eine Nabenachse, einen auf dieser drehbar gelagerten Antreiber, ein Schaltgetriebe mit mindestens zwei Gangstufen, eine Nabenhülse, eine Schaltvorrichtung zum Wechseln der Gangstufen im Schaltgetriebe, wobei ein Drehelement eine Kurvenbahn aufweist, welche im Falle einer Schaltung mit einem Stellelement zusammenwirkt, um seine eigene Position zu verändern, wobei das Stellelement zum Wechseln von einer Gangstufe auf eine andere durch die Schaltvorrichtung auf eine zur Drehzahl des Drehelementes verschiedene Drehzahl gebracht werden kann, wodurch die Kurvenbahn des Drehelementes auf Vorsprüngen des Stellelementes aufgleiten und durch den axialen Ortswechsel des Drehelementes dessen Kupplungsverbindung mit einem Getriebeteil lösen. Der Vorteil bei der vorgeschriebenen servounterstützten Ausschaltung einer Klauenkupplung liegt in seiner kostengünstigen Herstellung, in der Möglichkeit, mehrere solcher servounterstützter Schalteinrichtungen anzuordnen, sowie in der Möglichkeit, einen Überlastschutz ohne größere Inanspruchnahme von Bauraum zu installieren.

### Bezugszeichenliste

- 1.: Nabenachse
- 2.: Ring
- 3.: Ringwulst
- 4.: Schaltgetriebe
- 5.: Schaltvorrichtung
- 6.: Drehelement
- 7.: Kurvenbahn
- 8.: Stellelement
- 9.: Schrägfläche
- 10.: Getriebeteil
- 11.: erste Klauen
- 12.: zweite Klauen
- 13.: Anschlag
- 14.: Arretierungsklaue
- 15.: Vorsprung
- 16.: Schaltelement
- 17.: Aussparung
- 18.: Schlitz
- 19.: Hülse
- 20.: Feder
- 21.: Joch für Feder
- 22.: Mitnahmeprofil
- 23.: Reibungskupplung

## Patentansprüche

1. Mehrgangnabe für ein Fahrrad, umfassend
* eine Nabenhülse mit einer Felge zur Bildung eines Laufrades,
* einen auf einer Nabenachse (1) drehbar gelagerten Antreiber,
* ein Schaltgetriebe (4) mit mindestens zwei Gangstufen, die mittels einer Schaltvorrichtung (5) und mindestens einer Klauenkupplung geschaltet werden können, wobei die Klauenkupplung zwischen einem Getriebeteil (10) und einem Drehelement (6) angeordnet ist, das von einem Stellelement (8) zum Öffnen der Kupplung mit Servounterstützung axial verschoben wird,
**dadurch gekennzeichnet,**
**dass** das mit dem Drehelement (6) drehende Stellelement (8) auf der einen Seite mindestens einen Vorsprung (15) aufweist, der mit einer Kurvenbahn (7) am Drehelement (6) in Wirkverbindung steht und auf der anderen Stellelementseite Arretierungsklauen (14) angeordnet sind, in deren Zwischenräume ein von der Schaltvorrichtung (5) verschobenes Schaltelement (16) eintauchen kann, wodurch das Stellelement (8) an der synchronen Drehung mit dem Drehelement (6) gehindert wird und über die Aufgleitbewegung von Vorsprung (15) an der Kurvenbahn (7) das Drehelement (6) und das Stellelement (8) relativ zueinander in einen größeren axialen Abstand gebracht werden kann.

2. Mehrgangnabe nach Anspruch 1,
**dadurch gekennzeichnet,**
**dass** die Schaltvorrichtung (5) vornehmlich im Fahrbetrieb auf das Schaltelement (16) wirkt, wodurch eine Änderung der relativen Drehzahlen des Drehelements (6) und des Stellelements (8) zueinander hervorgerufen wird.

3. Mehrgangnabe nach Anspruch 1,
**dadurch gekennzeichnet,**
**dass** eine Drehmomentverbindung aus der in axialer Richtung lösbaren Klauenkupplung besteht, deren erste Klauen (11) am Drehelement (6), mit zweiten Klauen
(12) am Getriebeteil (10) in Eingriff stehen.

4. Mehrgangnabe nach Anspruch 1,
**dadurch gekennzeichnet,**
**dass** das Stellelement (8) zwischen der Kurvenbahn (7) des Drehelementes (6) und einem Anschlag (13) angeordnet ist.

5. Mehrgangnabe nach Anspruch 4,
**dadurch gekennzeichnet,**
**dass** der Anschlag (13) axial fest mit der Nabenachse (1) verbunden ist.

6. Mehrgangnabe nach Anspruch 5,
**dadurch gekennzeichnet,**
**dass** der Anschlag (13) eine zum Stellelement (8) hin gerichtete Aussparung (17) aufweist, in die das Schaltelement (16) hinter die Ebene des Anschlages (13) eintauchen kann.

7. Mehrgangnabe nach Anspruch 5,
**dadurch gekennzeichnet,**
**dass** der Anschlag (13) eine stirnseitige Ringfläche an einem Ring (2) ist, der von einem Ringwulst (3) in seiner Position gehalten wird.

8. Mehrgangnabe nach Anspruch 3,
**dadurch gekennzeichnet,**
**dass** für den Fall, dass das Drehelement (6) und das Getriebeteil (10) umlaufen und über ihre Klauen (11, 12) Drehmoment übertragen wird, das Stellelement (8) durch das Schaltelement (16) auf der Nabenachse (1) drehfest gemacht werden kann, wodurch die Vorsprünge (15) auf Schrägflächen (9) der Kurvenbahn (7) aufgleiten und eine axial wirkende Servokraft entsteht, die das Drehelement (6) unabhängig von dem übertragenen Drehmoment axial verschiebt und die ersten Klauen (11) aus ihrem Verbund mit den zweiten Klauen (12) löst.

9. Mehrgangnabe nach Anspruch 8,
**dadurch gekennzeichnet,**
**dass** zwischen der Kupplung, bestehend aus den ersten Klauen (11) sowie den
zweiten Klauen (12), und dem Schaltelement (16) eine Überlastkupplung angeordnet ist.

10. Mehrgangnabe nach Anspruch 9,
**dadurch gekennzeichnet,**
**dass** die Überlastkupplung eine federbelastete Friktion aufweist.

11. Mehrgangnabe nach Anspruch 9,
**dadurch gekennzeichnet,**
**dass** die Überlastkupplung aus Abweisschrägen zwischen den Arretierungsklauen (14) und dem Schaltelement (16) besteht.

12. Mehrgangnabe nach Anspruch 1,
**dadurch gekennzeichnet,**
**dass** die Kurvenbahn (7) mit ihren Schrägflächen (9) an einer Stirnfläche des Drehelementes (6), und Vorsprünge (15) an einer zu der Kurvenbahn (7) hinweisenden Stirnfläche des Stellelementes (8) angeordnet sind.

13. Mehrgangnabe nach Anspruch 9,
**dadurch gekennzeichnet,**
**dass** in der Wirkkette für die mit dem Servomechanismus erzeugte axiale Verschiebe- bzw. Servokraft zwischen einem axialen Widerlager und der auszuschaltenden Klauenkupplung mit den Klauen (11, 12) ein elastisches Federelement angeordnet ist, um im Falle einer Überschreitung des Grenzlastschaltmomentes an der Klauenkupplung die Axialverschiebung aufzunehmen.

14. Mehrgangnabe nach Anspruch 13,
**dadurch gekennzeichnet,**
**dass** eine Feder (20) das elastische Federelement bildet und im Kraftverlauf zwischen dem Ringwulst (3) als axialer Anschlag und dem Stellelement (8) angeordnet ist.

15. Mehrgangnabe nach Anspruch 13,
**dadurch gekennzeichnet,**
**dass** eine Feder (20) im Kraftverlauf zwischen dem Getriebeteil (10) und dem Drehteil (6) angeordnet ist.

16. Mehrgangnabe nach Anspruch 14 oder 15,
**dadurch gekennzeichnet,**
**dass** die Feder (20) unter axialer Druck-Vorspannung steht, wobei sie eine effektive maximale Länge nicht überschreiten kann.

## Claims

1. Multi-speed hub gears for a bicycle, comprising
* a hub sleeve with a rim for forming a running wheel,
* a driver mounted rotatably on a hub spindle (1),
* a gear-changing mechanism (4) with at least two gear steps which can be changed by means of a gear-changing device (5) and at least one claw clutch, the claw clutch being arranged between a gear-mechanism part (10) and a rotational element (6) which is displaced axially by an adjustment element (8) in order to open the clutch with servo assistance, **characterized in that** the adjustment element (8) which rotates together with the rotational element (6) has, on one side, at least one projection (15) which is operatively connected to a curved track (7) on the rotational element (6), and, on the other side of the adjustment element, there are locking claws (14), into the intermediate spaces of which a gear-changing element (16) displaced by the gear-changing device (5) can dip, as a result of which the adjustment element (8) is prevented from rotating synchronously with the rotational element (6), and, by the projection (15) sliding along the curved track (7), the rotational element (6) and the adjustment element (8) can be brought into a relatively large axial spacing relative to each other.

2. Multi-speed hub gears according to Claim 1, **characterized in that** the gear-changing device (5) acts on the gear-changing element (16) primarily during the cycling mode, thus causing a change in the relative rotational speeds of the rotational element (6) and of the adjustment element (8) with respect to each other.

3. Multi-speed hub gears according to Claim 1, **characterized in that** a torque connection comprises the claw clutch which can be released in the axial direction and the first claws (11) of which, which are on the rotational element (6), are in engagement with second claws (12) on the gear-mechanism part (10).

4. Multi-speed hub gears according to Claim 1, **characterized in that** the adjustment element (8) is arranged between the curved track (7) of the rotational element (6) and a stop (13).

5. Multi-speed hub gears according to Claim 4, **characterized in that** the stop (13) is connected axially in a fixed manner to the hub spindle (1).

6. Multi-speed hub gears according to Claim 5, **characterized in that** the stop (13) has a recess (17) which is directed towards the adjustment element (8) and into which the gear-changing element (16) can dip behind the plane of the stop (13).

7. Multi-speed hub gears according to Claim 5, **characterized in that** the stop (13) is an end-side annular surface on a ring (2) and is kept in its position by an annular bead (3).

8. Multi-speed hub gears according to Claim 3, **characterized in that**, in the situation in which the rotational element (6) and the gear-mechanism part (10) revolve and torque is transmitted via their claws (11, 12), the adjustment element (8) can be made to be rotationally fixed on the hub spindle (1) by the gear-changing element (16), as a result of which the projections (15) slide on oblique surfaces (9) of the curved track (7), and an axially acting servo force is produced which displaces the rotational element (6) axially irrespective of the transmitted torque and releases the first claws (11) from their bond with the second claws (12).

9. Multi-speed hub gears according to Claim 8, **characterized in that** an overload clutch is arranged between the clutch, comprising the first claws (11) and the second claws (12), and the gear-changing element (16).

10. Multi-speed hub gears according to Claim 9, **characterized in that** the overload clutch has spring-loaded friction.

11. Multi-speed hub gears according to Claim 9, **characterized in that** the overload clutch comprises deflecting slopes between the locking claws (14) and the gear-changing element (16).

12. Multi-speed hub gears according to Claim 1, **characterized in that** the curved track (7) is arranged with its oblique surfaces (9) on an end surface of the rotational element (6), and projections (15) are arranged on an end surface of the adjustment element (8), which end surface faces the curved track (7).

13. Multi-speed hub gears according to Claim 9, **characterized in that** an elastic spring element is arranged in the chain of action for the axial displacement or servo force, which is generated by the servo mechanism, between an axial abutment and the claw clutch, which is to be disengaged, with the claws (11, 12), in order to absorb the axial displacement in the event of the limit-load gear-changing moment on the claw clutch being exceeded.

14. Multi-speed hub gears according to Claim 13, **characterized in that** a spring (20) forms the elastic spring element and is arranged in the force path between the annular bead (3), as the axial stop, and the adjustment element (8).

15. Multi-speed hub gears according to Claim 13, **characterized in that** a spring (20) is arranged in the force path between the gear-mechanism part (10) and the rotational part (6).

16. Multi-speed hub gears according to Claim 14 or 15, **characterized in that** the spring (20) is under axial compressive prestress, with it not being able to exceed an effective maximum length.

## Revendications

1. Moyeu à vitesses multiples pour une bicyclette, comprenant:
• une douille de moyeu avec une jante pour former une roue;
• un propulseur rotatif monté sur un axe de moyeu (1);
• un mécanisme de changement de vitesse (4) avec au moins deux étages de vitesse, qui peuvent être commutés au moyen d'un dispositif de commutation (5) et d'au moins un accouplement à griffes,
dans lequel l'accouplement à griffes est disposé entre une pièce de transmission (10) et un élément tournant (6), qui est déplacé axialement avec servo-assistance par un élément de commande (8) pour ouvrir l'accouplement,
**caractérisé en ce que** l'élément de commande (8) tournant avec l'élément tournant (6) présente sur un premier côté au moins une saillie (15) qui est en liaison active avec un chemin courbe (7) sur l'élément tournant (6) et dont l'autre côté de l'élément de commande porte des griffes de blocage (14), dans les espaces intermédiaires desquelles un élément de commutation (16) déplacé par le dispositif de commutation (5) peut plonger, ce qui empêche l'élément de commande (8) de tourner en synchronisme avec l'élément tournant (6) et ce qui permet d'amener l'élément tournant (6) et l'élément de commande (8) à une plus grande distance axiale l'un de l'autre par le mouvement de glissement de la saillie (15) sur le chemin courbe (7).

2. Moyeu à vitesses multiples selon la revendication 1, **caractérisé en ce que** le dispositif de commutation (5) agit principalement en mouvement sur l'élément de commutation (16), provoquant ainsi une variation des vitesses de rotation relatives de l'élément tournant (6) et de l'élément de commande (8) l'un par rapport à l'autre.

3. Moyeu à vitesses multiples selon la revendication 1, **caractérisé en ce qu'**il existe une liaison de couple de rotation composée de l'accouplement à griffes séparable en direction axiale, dont les premières griffes (11) sur l'élément tournant (6) sont en prise avec des deuxièmes griffes (12) sur la pièce de transmission (10).

4. Moyeu à vitesses multiples selon la revendication 1, **caractérisé en ce que** l'élément de commande (8) est disposé entre le chemin courbe (7) de l'élément tournant (6) et une butée (13).

5. Moyeu à vitesses multiples selon la revendication 4, **caractérisé en ce que** la butée (13) est axialement solidaire de l'axe de moyeu (1).

6. Moyeu à vitesses multiples selon la revendication 5, **caractérisé en ce que** la butée (13) présente un évidement (17) orienté vers l'élément de commande (8), dans lequel l'élément de commutation (16) peut plonger derrière le plan de la butée (13).

7. Moyeu à vitesses multiples selon la revendication 5, **caractérisé en ce que** la butée (13) est une face annulaire frontale sur une bague (2) qui est maintenue dans sa position par un bourrelet annulaire (3).

8. Moyeu à vitesses multiples selon la revendication 3, **caractérisé en ce que**, dans le cas où l'élément tournant (6) et la pièce de transmission (10) tournent et qu'un couple de rotation est transmis par leurs griffes (11, 12), l'élément de commande (8) est rendu solidaire en rotation avec l'axe de moyeu (1) par l'élément de commutation (16), ce qui fait glisser les saillies (15) sur des faces inclinées (9) du chemin courbe (7) et ce qui fait naître une force asservie agissant axialement, qui déplace axialement l'élément tournant (6) indépendamment du couple de rotation transmis et qui libère les première griffes (11) de leur engagement avec les deuxièmes griffes (12).

9. Moyeu à vitesses multiples selon la revendication 8, **caractérisé en ce qu'**un accouplement de surcharge est disposé entre l'accouplement, composé des premières griffes (11) ainsi que des deuxièmes griffes (12), et l'élément de commutation (16).

10. Moyeu à vitesses multiples selon la revendication 9, **caractérisé en ce que** l'accouplement de surcharge présente une friction chargée par un ressort.

11. Moyeu à vitesses multiples selon la revendication 9, **caractérisé en ce que** l'accouplement de surcharge se compose de faces inclinées d'écartement entre les griffes de blocage (14) et l'élément de commutation (16).

12. Moyeu à vitesses multiples selon la revendication 1, **caractérisé en ce que** le chemin courbe (7) est disposé avec ses faces inclinées (9) sur une face frontale de l'élément tournant (6) et des saillies (15) sont disposées sur une face frontale de l'élément de commande (8) tournée vers le chemin courbe (7).

13. Moyeu à vitesses multiples selon la revendication 9, **caractérisé en ce qu'**un élément de ressort élastique est disposé dans la chaîne d'action pour la force de déplacement ou la force asservie axiale produite avec le servomécanisme entre une butée axiale et l'accouplement à griffes à débrayer avec les griffes (11, 12), afin de reprendre le déplacement axial dans le cas d'un dépassement du couple de commutation sous charge limite sur l'accouplement à griffes.

14. Moyeu à vitesses multiples selon la revendication 13, **caractérisé en ce qu'**un ressort (20) forme l'élément de ressort élastique et est disposé dans le trajet des forces entre le bourrelet annulaire (3) servant de butée axiale et l'élément de commande (8).

15. Moyeu à vitesses multiples selon la revendication 13, **caractérisé en ce qu'**un ressort (20) est disposé dans le trajet des forces entre la pièce de transmission (10) et l'élément tournant (6).

16. Moyeu à vitesses multiples selon la revendication 14 ou 15, **caractérisé en ce que** le ressort (20) se trouve sous une contrainte de compression axiale, pour laquelle il ne peut pas dépasser une longueur maximale effective.
